Europäisches Patentamt

European Patent Office

Office européen des brevets

(11) Publication number: **0 013 265**
**B1**

# EUROPEAN PATENT SPECIFICATION

(45) Date of publication of patent specification: 25.05.83

(51) Int. Cl.³: **F 16 K 1/226, F 16 K 1/228**

(21) Application number: **79890052.8**

(22) Date of filing: **21.11.79**

(54) Seat assembly for high-temperature valves and use in butterfly valves.

(30) Priority: **02.01.79 US 214**

(43) Date of publication of application:
**09.07.80 Bulletin 80/14**

(45) Publication of the grant of the patent:
**25.05.83 Bulletin 83/21**

(84) Designated Contracting States:
**AT DE FR GB IT**

(56) References cited:
**DE - A - 2 338 353**
**FR - A - 2 279 992**
**FR - A - 2 408 082**
**US - A - 4 113 268**
**US - A - 4 162 782**

(73) Proprietor: **ACF INDUSTRIES, INCORPORATED**
**750 Third Avenue**
**New York 10017, N.Y. (US)**

(72) Inventor: **Hinrichs, John M.**
**3011 Rustling Oaks**
**Bryan, Texas 77801 (US)**

(74) Representative: **Kretschmer, Adolf, Dipl.-Ing.**
**Schottengasse 3a**
**A-1014 Wien (AT)**

Courier Press, Leamington Spa, England.

Seat assembly for high-temperature valves and use in butterfly valves

The invention relates to a seat assembly for a high temperature valve, preferably a butterfly valve, including a valve body, a valve chamber, a flow passage communicating with the valve chamber, an internal annular groove in the body about the flow passage defining a pair of generally parallel sides, and a valve member, preferably a butterfly disc, mounted in said valve chamber for movement between open and closed positions relative to the flow passage and having a tapered peripheral sealing surface, the seat assembly being anchored within the annular groove between the generally parallel sides and including a pair of metallic seat rings having spaced laterally extending inner end portions for providing a dual seal with said tapered peripheral sealing surface. As shown in US—A—4 113 268, a sealing assembly for a butterfly valve is illustrated in which a soft primary seal is positioned between a pair of spaced metal secondary seals. The secondary metal seals are held out of contact with the seating surface of the butterfly disc by the soft seal under normal operating conditions. Only when the soft primary seal is destroyed do the secondary metal seals engage the disc in sealing relation. A separate resilient backing ring urges the primary soft seal and the secondary metal seals inwardly toward the seating surface of the disc.

US—A—4 162 782 discloses a seal assembly mounted in an annular groove about the flow passage. The seal assembly includes a metallic body having a pair of outer legs seated in the bottom of the groove and a pair of inner legs contacting the outer periphery of the valve disc. A soft seal is positioned between the inner legs and the inner ends of the inner legs contact the valve disc to provide metal sealing surfaces. Upon contact with the disc, the inner legs are urged radially outwardly. However, the inner legs do not have a large radial movement and a substantial frictional force is provided by contact with the inner legs upon radially outward movement which increases the operating torque for moving the valve between open and closed positions. With certain types of metal finishes or coatings on the valve disc, some scratching of the sealing surface on the valve disc might occur with a high frictional contact, particularly if the seal has a so-called knife edge metal contact surface.

FR—A—2 279 992 shows a sealing assembly in a shutoff device of the butterfly type. The sealing assembly is mounted on a shoulder in the flow passage of the shutoff device and comprises a seat ring of rigid material urged against said shoulder by a plurality of bolts thereby clamping the outer portion of a resilient soft seal. The surface of the rigid seat ring adjacent to the inner portion of the soft seal is concave in cross section and acts as a support for the soft seal, while part of the inner circumference of the seat ring acts as stop means for the butterfly disc in its closed position. The other face of the soft seal is engaged by an elastic backing ring whose inner diameter is greater than the inner diameter of the soft seal. The rigid seat ring, although being in physical contact with the butterfly disc in its closed position, has no sealing function so that if the soft seal is worn out or destroyed some medium will leak through between the periphery of the closed butterfly disc and the rigid seat ring.

A primary object of this invention is to provide a seat assembly which will accommodate a wide variation in seal contact with the valve member while maintaining a tight seal without appreciable increases in the operating torque for the opening and closing of the valve member. A further object of the invention is a valve seat design which is highly flexible and moves radially outwardly and laterally outwardly upon contact with the valve member thereby to follow the sealing contour of the valve member under all conditions of operation and to maintain a tight sealing contact therewith.

The invention solves the problem by each of said inner end portions having a free unrestrained length outside the groove extending radially inwardly beyond the groove and terminating at an arcuate curled end flaring laterally and then radially outwardly, one of the inner end portions having a substantially larger free unrestrained length than the other of said inner end portions, the arcuate ends of said inner end portions being spaced from each other and extending laterally in opposite directions, the arcuate ends defining inner arcuate surfaces in sumultaneous metal-to-metal sealing relation with the adjacent peripheral sealing surface of the valve member in the closed position thereof and being flexible in both radial and lateral directions. The inner end portions of the metallic seat rings have a substantial free length which makes the inner end portions highly flexible for moving radially inwardly and radially outwardly a substantial amount thereby to follow the sealing contour of the valve member, as the member moves into and out of a closed position, under all conditions of operation. The curled or arcuate ends of the free end portions thus maintain a line sealing contact with the valve member during and after radial deflection, both inwardly and outwardly.

A resilient soft seal may be mounted between the spaced inner end portions at a location to seal with the tapered peripheral sealing surface of the valve member. This seat assembly comprising a combination metal and elastomer seat which is tight sealing, pressure and temperature responsive, will continue to provide controlled sealing in the event the soft elastomer seal is destroyed such as by fire or the like.

With the valve being a butterfly valve the sealing surface of the butterfly disc adjacent to the seat assembly is usually tapered or chamfered and fluid pressure acting against the face of the disc at the closed position thereof will move the disc around, for example, 0.5 mm in the downstream direction. If the valve is a bidirectional valve functioning with fluid flow in either direction, the seat assembly must be adapted to adjust for variations in tolerances and for movement of the valve disc in a downstream direction from either direction of flow. The highly flexible unrestrained inner end portions of the present seat assembly provide sealing contact adjacent the sealing surface of the valve disc under such conditions of operation without appreciably increasing the operating torque for moving the valve member between open and closed positions. It is highly desirable to maintain a low operating torque for moving the valve member between open and closed positions, and the upstream free end portion of the seat assembly must be sufficiently flexible to respond to upstream pressure and of sufficient length to follow the disc without losing sealing contact since a downstream movement of the tapered valve disc away from the upstream end portion reduces the disc diameter at seat contact. In contrast, the downstream end portion of the seat assembly must be sufficiently flexible to expand radially outwardly to accommodate a tighter engagement without causing the operating torque for moving the closure member to increase substantially. The upstream end portion of the seat assembly has an inner diameter smaller than the inner diameter of the downstream end portion and an unrestrained free length longer than the free length of the downstream end portion in the normal direction of fluid flow.

Another feature of the present design is in the return of the resilient or elastomeric soft seal, after the valve disc is opened, by the deflected free length of the flexible upstream end portion. When the upstream end portion returns to its undeflected free position, it forces the soft seal back to its original uncompressed position. This minimizes the effect of cold flow and creep in the soft seal which is present in many soft elastomers such as polytetrafluorethylene. The way of carrying out the invention is described in detail below with reference to drawings which illustrate specific embodiments, in which:—

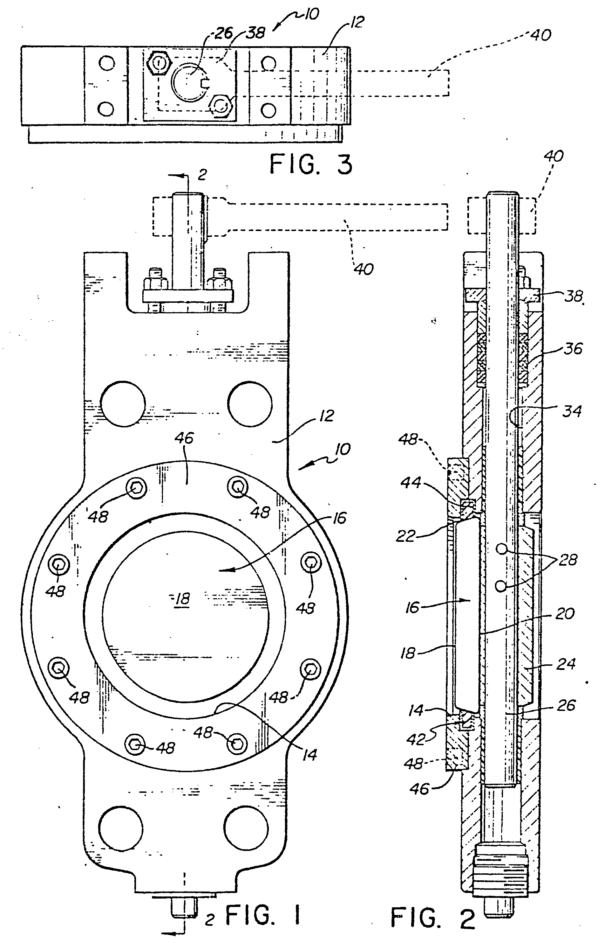

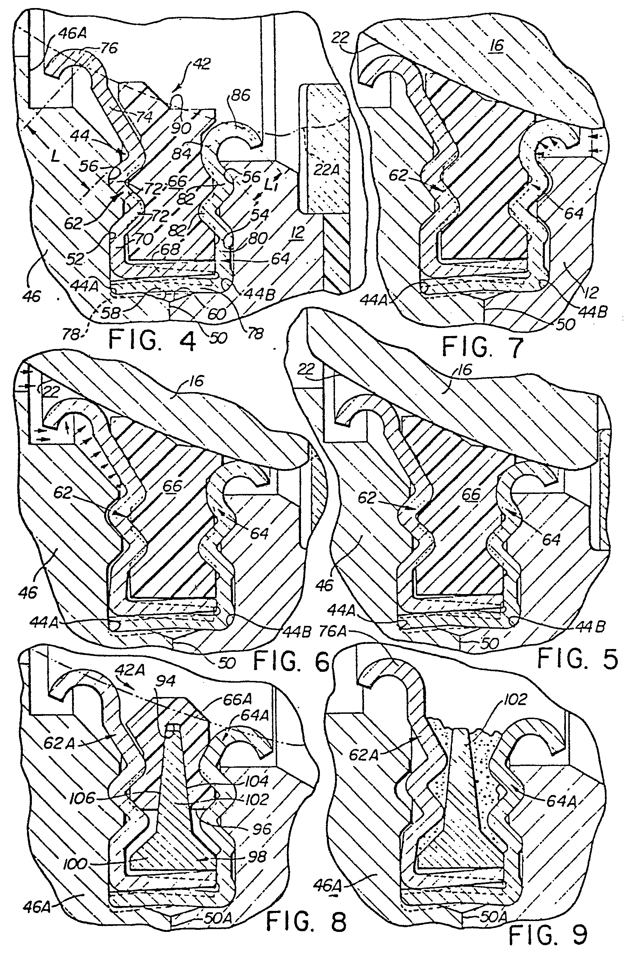

Fig. 1 is an end elevation of a butterfly valve structure which incorporates the seat assembly comprising the present invention; Fig. 2 is a section taken generally along the line 2—2 of Fig. 1; Fig. 3 is a top plan of the butterfly valve shown in Figs. 1 and 2; Fig. 4 is an enlarged cross sectional view of the seat assembly comprising the present invention showing the seat assembly in a free unrestrained position at the open position of the valve member; Fig. 5 is an enlarged sectional view similar to Fig. 4 but showing the seat assembly in a deflected position with the valve member shown in a closed position in contact with the free inner end portion of the seat assembly; Fig. 6 is a cross sectional view similar to Fig. 5 but showing the seat assembly in the closed position of the valve member with upstream pressure applied from the left as shown in Fig. 6 and with the valve disc moved downstream slightly; Fig. 7 is a cross sectional view similar to Fig. 6 but showing fluid pressure applied from the right as viewed in Fig. 7; Fig. 8 is a cross sectional view of a modified form of the invention in which a metal spacer is positioned between the sides of the metal seat structure to provide rigidity to the seat assembly upon destruction of the soft seal; and Fig. 9 is a cross sectional view of the embodiment shown in Fig. 8 with the resilient soft seal destroyed.

Referring now to the drawings for a better understanding of the invention and more particularly to the embodiment shown in Figs. 1—7, the butterfly valve structure is indicated generally at 10 and comprises a body 12 having a flow passage 14 therethrough. A butterfly valve disc indicated generally at 16 is mounted within the flow passage for moving between open and closed positions and comprises a front face 18, a rear face 20, and an outer peripheral sealing surface 22 extending about the outer periphery of valve disc 16 and forming a generally spherical sealing surface. Rear face 20 has an integral sleeve 24 and a shaft 26 fitting within sleeve 24 is secured by suitable pins 28 to sleeve 24 for connecting valve disc 16 for rotation with shaft 26. The axial rotation of shaft 26 is offset a distance from the centre line of disc 16, and may, for example, be around ca. 20 mm for a disc having a diameter of ca. 150 mm. Body 12 has a bore 34 receiving shaft 26. Packing material is illustrated at 36 and a packing retainer nut 38 engages and compresses packing material 36. A suitable handle 40 indicated at broken lines is secured to the upper end of shaft 26 for rotation of disc 16 between open and closed positions.

The seat assembly comprising the present invention is illustrated generally at 42. Seat Assembly 42 fits in an annular groove 44 formed at joint 50 between the main body portion of body 12 and a removable annular retainer ring or plate 46. Screws 48 threaded into internally threaded openings in body 12 hold retainer plate 46 in tight engagement with seat assembly 42. Groove 44 has sides 52 and 54 which are generally parallel but have indentations or corrugations formed therein at 56. The bottom of groove 44 is defined by tapered surface 58 on retainer ring 46 and adjacent tapered surface 60 on the main portion of body 12.

Seat assembly 42 fits within groove 44 and has an outer metal body or housing comprising an upstream seat ring generally indicated at 62 and a downstream seat ring generally indicated at 64 which are generally L-shaped in cross section. A soft resilient face seal is indicated at 66 positioned between upstream seat ring 62 and downstream seat ring 64. Upstream seat ring 62 comprises a lower leg 68 and a side 70 having corrugations or indentations 72 therein which nest within the indentations in the adjacent side 52 of groove 44. Upstream seat ring 62 has a free unsupported length "L" forming end portion 74 and extending to the contact line of seat ring 62 with the sealing surface 22 of valve disc 16. An outwardly curled or arcuate end 76 of end portion 74 engages in sealing line contact the adjacent sealing surface 22 of disc 16 at closed position.

Downstream seat ring 64 has a lower leg 78 and a side 80 with corrugations 82 therein which nest with adjacent indentations in side 54 of groove 44. Downstream seat ring 64 has a free unsupported length indicated at "L1" forming an end portion 84 which terminates at an outwardly curled or arcuate end 86 in metal-to-metal sealing contact with the adjacent surface 22 of disc 16.

It is noted that the free length "L" of upstream seat ring 62 is around twice the length of the free length "L1" of downstream seat ring 64. When the valve is initially installed, pressure acting on the disc or closure member 16 tends to deflect or move the disc in a downstream direction due to tolerances and the like. For example, with a ca. 150 mm diameter disc, the disc will move downstream around 0,5 mm. Therefore, upstream seat ring 62 should be sufficiently flexible to respond to this pressure differential and be of a sufficient length to follow in sealing contact the sealing surface 22 of disc 16 without losing contact with sealing surface 16. Since sealing surface 22 is generally spherical, movement in a downstream direction of disc 16 from the left viewing Fig. 6 reduces the diameter of disc 16 at seat contact. Thus, seat ring 62 should be capable of deflecting radially inwardly which reduces the inside diameter of ring 62 but yet arcuate end 76 must maintain sealing contact with surface 22.

It is to be understood that valve structure 10 is bidirectional and fluid pressure may act against disc 16 from either direction. In the event that fluid pressure is acting against the downstream side from the right viewing Fig. 7, valve disc 16 may move to the left around ca. 0,5 mm. When this occurs, the sealing contact surface 22 of disc 16 engaging arcuate end 76 increases the disc diameter at end 76 and seat ring 62 must expand radially outwardly to accommodate surface 22 and without causing the operating torque for opening and closing the valve to increase substantially. When valve structure 10 is initially assembled, the initial deflection of upstream seat ring 62 is around twice that of downstream seat ring 64. The amount of the initial deflection is in relation to the total free unsupported length of the respective end portions 74 and 84.

Soft face seal 66 is preferably formed of a soft elastomeric material, such as nylon or polytetrafluoroethylene, and has an indentation in its outer face at 90 which will receive foreign matter or the like therein which adheres to the adjacent sealing surface 22 of valve disc 16. Soft seal 66 has indentations therein which nest with the corrugations in seat rings 62 and 64 and is tightly gripped thereby.

Before assembly, upstream seat ring 62 and downstream seat ring 64 are snapped together with soft seal 66 therebetween. The outer diameter of upstream seat ring 62 formed by leg 68 is slightly greater than the inner diameter of downstream seat ring 64 formed by leg 78 so a tight snap fit is provided. Leg 78 of seat ring 64 is flared outwardly in its free position prior to insertion within groove 44 as shown in broken lines in Fig. 4. With retainer ring 46 removed, the assembly is inserted within groove 44 and then retainer ring 46 is inserted with leg 78 connecting tapered surface 58 and being urged radially inwardly to provide a spring loaded static seal. The width of groove 44 is slightly less than the width of leg 78 and when seat retainer 46 is inserted and screws 48 tightened, a metal-to-metal pressure responsive seal is formed at the corners of groove 44 indicated at 44A and 44B since leg 78 is compressed and bowed radially inwardly slightly by the sides of groove 44 to provide the seals at corners 44A and 44B which prevent any leakage through joint 50 formed by retainer ring 46 and body 12.

As upstream seat ring 62 is flexible and has a smaller diameter than the diameter of disc 16, the back surface of sealing surface 22 is contoured as shown at 22A to provide a gradual taper for contacting end 76 as the disc 16 is rotated to a fully closed position thereby to gradually urge end 76 of upstream seat ring 62 radially outwardly and laterally outwardly without pinching end 76. Retainer 46 has a recess at 46A receiving end 76 of upstream seat ring 62 to protect end 76 from the line flow thereby allowing seat ring 62 to relax and expand radially to its original position one disc member has been moved out of contact engagement with disc 16.

As shown in Fig. 5 when the valve disc 16 is in a closed position, pressure from the upstream side acts on the underside of seat ring 62 urges arcuate end 76 into tight metal-to-metal sealing engagement with the adjacent sealing face 22 of disc 16. The downstream movement of end portion 76 squeezes soft seal 66 into engagement with the sealing surface 22 of disc 16. This is particularly advantageous in the event soft seal 66 has permanent deformation resulting from cold flow or creep as end portion 74 will force soft seal 66 to its original uncompressed position when disc 16 is opened and end portion 74 returns to its undeflected position. When soft seal 66 is destroyed by high temperature, such as fire or the like, arcuate ends 76 and 86 of metal seat rings 62 and 64 maintain metal-to-metal sealing contact with the adjacent sealing surface 22 of disc 16. Also fluid seals are maintained at corners 44A and 44B which prevents leakage at joint 50 from either direction or flow.

Referring now to Figs. 8 and 9, a separate embodiment of the invention is disclosed in which a soft seal 66A has an annular groove 94 along its rear face 96. A metal spacer member indicated generally at 98 has a base 100 and an extension 102 with tapered sides or surfaces 104 and 106. Extension 102 fits within groove 84 and tapered surfaces 104 and 106 urge seal 66A outwardly to aid in retaining soft seal 66A in position between upstream seat ring 62A and downstream seat ring 64A. Upstream seat ring 62A and downstream seat ring 64A are identical to respective seat rings 62 and 64 of the embodiment shown in Figs. 4—7. Spacer members 98 supports seat rings 62A and 64A in the event of the destruction of seal 66A. As shown in Fig. 9, with seal 66A destroyed upstream seat ring 62A is urged by very high pressure at the closed position of disc 16 against the tapered surface 106 and extension 102 thus provides a support for seat ring 62A to maintain tight metal-to-metal sealing relation with the adjacent sealing surface 22 of disc 16. Any increase in pressure results in an increased contact force from end 76A against the adjacent sealing surface 22 of disc 16. The seat assembly indicated generally at 42A of the embodiment shown in Figs. 8 and 9 is assembled in the same manner as the embodiment shown in Figs. 4—7 but with spacer member 98 being inserted upon the initial assembly of rings 62A and 64A.

According to the present invention, the metal seat rings by having a free unsupported length formed by the end portions are able to expand radially to conform to the sealing contour of the closure member or valve disc even though variations in the diameter of disc 16 may occur, and this is obtained without any appreciable increase in the operating torque for opening and closing the valve disc. Seat rings 62 and 64 are made of a relatively thin metal material which is preformed with arcuate ends that are radially expandable when forced into engagement with the disc. Even under repeated usage of the valve structure, the flexible end portions will contract or move radially inwardly when the valve is moved to an open position. Thus, a very effective sealing assembly is provided which minimizes any necessity of extremely close tolerances on the seat rings as well as the disc or closure member. The arcuate ends permit a line sealing contact with the adjacent closure member even though the arcuate ends may move laterally outwardly and radially in either direction. This also permits the deflection in the valve disc from the upstream pressure which moves the valve disc downstream.

As an example, with a butterfly valve structure having a diameter of around 150 mm, downstream seat ring moves radially outwardly around 0,3 mm while the upstream seat ring moves radially outwardly around 0,5 mm. The thickness of seat rings 62 and 64 is around 0,75 mm to maintain the desired flexibility which is necessary or inherent in a design of the type illustrated. The butterfly valve structure may operate under relatively high fluid pressures such as 10350 to 13800 k Pa, for example.

**Claims**

1. A seat assembly (42) for a high temperature valve (10), preferably a butterfly valve, including a valve body (12), a valve chamber, a flow passage (14) communicating with the valve chamber, an internal annular groove (44) in the body about the flow passage defining a pair of generally parallel sides (52, 54), and a valve closure member (16), preferably a butterfly disc, mounted in said valve chamber for movement between open and closed positions relative to the flow passage (14) and having a tapered peripheral sealing surface (22), the seat assembly (42) being anchored within the annular groove between the generally parallel sides (52, 54) and including a pair of metallic seat rings (62, 64) having spaced laterally extending inner end portions (74, 84) for providing a dual seal with said tapered peripheral sealing surface (22), characterized by each of said inner end portions (74, 84) having a free unrestrained length outside the groove (44) extending radially inwardly beyond the groove and terminating at an arcuate curled end (76, 86) flaring laterally and then radially outwardly, one of the inner end portions (74) having a substantially larger free unrestrained length than the other of said inner end portions (84), the arcuate ends (76, 86) of said inner end portions (74, 84) being spaced from each other and extending laterally in opposite directions, the arcuate ends (76, 86) defining inner arcuate surfaces in simultaneous metal-to-metal sealing relation with the adjacent peripheral sealing surface (22) of the valve member (16) in the closed position thereof and being flexible in both radial and lateral directions.

2. A seat assembly as claimed in claim 1 wherein a resilient soft seal (66) is mounted between the spaced inner end portions (74, 84) at a location to seal with the tapered peripheral sealing surface (22) of the valve closure member (16).

3. A seat assembly as claimed in claim 2 wherein means are provided for retaining the soft seal (66) between the seat rings (62, 64), the soft seal (66) and the arcuate ends (76, 86) of both seat rings (62, 64) are in simultaneous sealing contact relation with the valve closure member (16) in the closed position thereof, the inner end portions (74, 84) of the seat rings (62, 64) are flexed both radially and laterally outwardly when initial contact is made with the valve member (16) when moved to the closed position, and are in sealing contact with the valve closure member (16) in the closed position thereof under all conditions of operation, said arcuate ends (76, 86) when exposed to fluid pressure in the closed position of the valve closure member (16) are urged into tight sealing relation with the valve closure member.

4. A seat assembly as claimed in claim 3 wherein the sides (70, 80) of the seat rings (62, 64) are corrugated (72, 82) and grip the soft seal (66) therebetween to define said means for retaining the soft seal.

5. A seat assembly as claimed in any one of claims 1 to 4 wherein the seat rings (62, 64) are generally L-shaped in cross section with outer legs (68, 78) of the seat rings being in lapped relation and forming the base portion of a metal housing at the bottom (58, 60) of the groove (44).

6. A seat assembly as claimed in claim 5 wherein the outer legs (68, 78) of the seat rings (62, 64) are snapped together in an overlapping relation.

7. A seat assembly as claimed in any one of claims 1 to 6 wherein the leg (78) of the outermost seat ring (64) is of a width slightly greater than the width of the groove (44) and is squeezed between the sides (52, 54) of the groove (44) at the bottom corners (44A, 44B) thereof upon insertion of the seat assembly within the groove thereby bowing said leg radially inwardly and forming seals at the corners (44A, 44B) of the groove (44).

8. A seat assembly as claimed in any one of claims 1 to 7 wherein a separate metal spacer member (98) is mounted between the seat rings (62A, 64A) radially outwardly of the soft seal (66A) and in contact with the soft seal (66A) said spacer member (98) upon destruction of the soft seal maintaining a spacing between the sides of the seat rings (62A, 64A).

9. A butterfly valve (10) having a valve body (12) with a flow passage (14) therethrough, a butterfly disc (16) mounted in the flow passage (14) for movement between open and closed positions, an annular groove (44) about the flow passage (14) defining a bottom and generally parallel spaced sides (52, 54) forming corners (44A, 44B) with the bottom, and a seat assembly (42) in the groove (44) comprising a pair of metallic seat rings (62, 64), characterized by said seat rings (62, 64) being generally L-shaped in cross section with outer legs (68, 78) of the seat rings being in overlapped seated relation at the bottom of the groove (44) and sides of the seat rings being positioned adjacent the spaced groove sides, a seat retainer ring (46) being removably secured to a main body portion at a joint (50) therebetween, the annular groove (44) being situated at the joint (50) between the retainer ring (46) and main body portion, said retainer ring (46) pressing said seat rings (62, 64) tightly against the sides (52, 54) of the groove (44), and the sides of said seat rings having end portions (74, 84) engaging the butterfly disc (16) in metal-to-metal sealing relation under all conditions of operation when the disc is in a closed position.

10. A butterfly valve as claimed in claim 9 wherein the leg (78) of the outermost seat ring (64) is of a width slightly greater than the width of the groove (44) and is squeezed between the sides (52, 54) of the groove (44) at the corners (44A, 44B) thereof to bow the outermost leg radially inwardly and form metal static seals at the corners (44A, 44B) of the groove (44).

11. A butterfly valve as claimed in claim 10 wherein a portion of the groove bottom is tapered to urge the leg of the outermost seat ring (64) inwardly upon positioning of the retainer ring (46) in position.

**Revendications**

1. Assemblage de siège (42) pour vanne à haute température (10), de préférence une vanne-papillon, comprenant un corps de vanne (12), une chambre de vanne, un passage d'écoulement (14) communiquant avec la chambre de vanne, une gorge annulaire intérieure (44) dans le corps autour du passage d'écoulement délimitant deux côtés généralement parallèles (52, 54), et un organe (16) de fermeture de vanne, de préférence un disque papillon, monté dans ladite chambre de vanne pour se déplacer entre des positions d'ouverture et de fermeture par rapport au passage d'écoulement (14), et présentant une surface d'étanchéité périphérique cônique (22), l'assemblage de siège (42) étant fixé à l'intérieure de la gorge annulaire entre les côtés généralement parallèles (52, 54) et comprenant deux bagues d'appui métalliques (62, 64) comportant des parties d'extrémité intérieures espacées (74, 84) s'étendant latéralement pour réaliser un double joint d'étanchéité avec ladite surface d'étanchéité périphérique cônique (22), caractérisé par le fait que chacune desdites parties d'extrémité intérieures (74, 84) présente, à l'extérieur de la gorge (44), une longueur libre non contrainte s'étendant radialement vers l'intérieur au delà de la gorge et se terminant par une extrémité courbée en boucle (76, 86) inclinée latéralement puis radialement vers l'extérieur, l'une des parties d'extrémité intérieures (74) présentant une longueur libre non contrainte sensiblement plus grande que celle de l'autre desdites parties d'extrémité intérieures (84), les extrémités courbées (76, 86) desdites parties d'extrémité intérieures (74, 84) étant espacées l'une de l'autre et s'étendant latéralement dans des directions opposées, les extrémités courbées (76, 86) délimitant des surfaces intérieures courbées en relation d'étanchéité métal contre métal simultanée avec la surface d'étanchéité périphérique adjacente (22) de l'organe obturateur (16) dans sa position de fermeture et flexibles dans des directions et radiale, et latérale.

2. Assemblage de siège selon la revendication 1, dans lequel un joint d'étanchéité élastique (66) mou est monté entre les parties d'extrémité intérieures espacées (74, 84) dans une position propre à assurer l'étanchéité avec la surface d'étanchéité périphérique cônique (22) de l'organe de fermeture de vanne (16).

3. Assemblage de siège selon la revendication 2, dans lequel sont prévus des moyens pour maintenir le joint d'étanchéité mou (66) entre les bagues d'appui (62, 64), le joint d'étanchéité mou (66) et les extrémités courbées (76, 86) des deux bagues d'appui (62, 64) sont en relation de contact étanche simultané avec l'organe de fermeture de vanne (16) dans sa position de fermeture, les parties d'extrémité intérieures (74, 84) des bagues d'appui (62, 64) sont recourbées et radialement, et latéralement vers l'extérieur lorsqu'a lieu le contact initial avec l'organe de vanne (16) lorsqu'il est déplacé dans la position de fermeture, et sont en contact étanche avec l'organe de fermeture de vanne (16) dans sa position de fermeture sous toutes les conditions de fonctionnement, lesdites extrémités courbées (76, 86), lorsqu'elles sont exposées à la pression de fluide dans la position de fermeture de l'organe de fermeture de vanne (16), sont poussées en relation d'étanchéité serrée avec l'organe de fermeture de vanne.

4. Assemblage de siège selon la revendication 3, dans lequel les côtés (70, 80) des bagues d'appui (62, 64) ont des ondulations (72, 82) et serrent le joint d'étanchéité mou (66) entre eux pour définir lesdits moyens pour retenir le joint d'étanchéité mou.

5. Assemblage de siège selon l'une des revendications 1 à 4, dans lequel les bagues d'appui (62, 64) présentent une section transversale ayant dans son ensemble une forme en L, des pattes extérieures (68, 78) des bagues d'appui étant en relation de superposition et formant la partie de base d'un logement métallique au fond (58, 60) de la gorge (44).

6. Assemblage de siège selon la revendication 5, dans lequel les pattes extérieures (68, 78) des bagues d'appui (62, 64) sont enclenchés brusquement ensemble dans une relation de superposition.

7. Assemblage de siège selon l'une des revendications 1 à 6, dans lequel la patte (78) de la bague d'appui la plus extérieure (64) a une largeur légèrement supérieure à la largeur de la gorge (44) et est comprimée entre les côtés (52, 54) de la gorge (44) aux angles de font (44A, 44B) de celle-ci à la suite de l'insertion de l'assemblage de siège à l'intérieur de la gorge, de façon à courber ladite patte radialement vers l'intérieur et à former des joints d'étanchéité aux angles (44A, 44B) de la gorge (44).

8. Assemblage de siège selon l'une des revendications 1 à 7, dans lequel un organe d'entretoisement métallique séparé (98) est monté entre les bagues d'appui (62A, 64A), radialement à l'extérieur du joint d'étanchéité mou (66A) et en contact avec ce joint (66A), ledit organe d'entretoisement (98), lors de la destruction de l'étanchéité douce, maintenant un espacement entre les côtés des bagues d'appui (62A, 64A).

9. Vanne-papillon (10) comportant un corps de vanne (12), traversé par un passage d'écoulement (14), un disque papillon (16) monté dans le passage d'écoulement (14) pour se déplacer entre des positions d'ouverture et de fermeture, une gorge annulaire (44) autour du passage d'écoulement (14) délimitant un fond et des côtés espacés généralement parallèles (52, 54) formant des angles (44A, 44B) avec le fond, et, dans la gorge (44), un assemblage de siège (42) comprenant deux bagues d'appui métalliques (62, 64), caractérisée par le fait que lesdites bagues d'appui (62, 64) ont une section transversale ayant dans son ensemble une forme en L, des pattes extérieures (68, 78) des bagues d'appui étant en relation d'appui à recouvrement au fond de la gorge (44) et les côtés des bagues d'appui étant positionnés adjacents aux côtés espacés de la gorge, une plaque annulaire de retenue de siège (46) étant fixée de façon amovible sur une partie principale du corps, à une jonction (50) entre celles-ci, la gorge annulaire (44) étant située à la jonction (50) entre la plaque de retenue (46) et la partie principale du corps, ladite plaque de retenue (46) pressant lesdites bagues d'appui (62, 64) étroitement contre les côtés (52, 54) de la gorge (44), et les côtés desdites bagues d'appui comportant des parties d'extrémité (74, 84) en contact avec le disque papillon (16) dans une relation d'étanchéité métal contre métal sous toutes les conditions de fonctionnement lorsque le disque est dans une position de fermeture.

10. Vanne-papillon selon la revendication 9, dans laquelle la patte (78) de la bague d'appui la plus extérieure (64) a une largeur légèrement supérieure à la largeur de la gorge (44) et est comprimée entre les côtés (52, 54) de la gorge (44) aux angles (44A, 44B) de celle-ci pour courber la patte la plus extérieure radialement vers l'intérieure et former des joints d'étanchéité statiques métalliques aux angles (44A, 44B) de la gorge (44).

11. Vanne-papillon selon la revendication 10, dans laquelle une partie du fond de la gorge est cônique, afin de forcer la patte de la bague d'appui la plus extérieure (64) vers l'intérieur lors du positionnement de la plaque annulaire de retenue (46) en place.

**Patentansprüche**

1. Ventilsitzanordnung (42) für ein Hochtemperaturventil (10), vorzugsweise ein Klappenventil, mit einem Gehäuse (12), einer Kammer, einem mit der Kammer in Verbindung stehenden Durchflußkanal (14), einer sich im Gehäuse um den Durchflußkanal erstreckenden inneren Ringnut (44) mit zwei allgemein parallelen Seitenflächen (52, 54), und einem Verschlußglied (16), vorzugsweise einer Klappe, welches in der Kammer bezüglich des Durchflußkanals (14) zwischen einer Offenstellung und einer Schließstellung bewegbar angeordnet ist und am Umfang eine verjüngte Dichtfläche (22) aufweist, wobei die Ventilsitzanordnung (42) in der Ringnut zwischen den allgemein parallelen Seitenflächen (52, 54) festgelegt ist und ein Paar metallener Sitzringe (62, 64) mit sich in Abstand quer erstreckenden inneren Endabschnitten (74, 84) zur Erzielung einer doppelten Abdichtung an der verjüngten Dichtfläche (22) aufweist, dadurch gekennzeichnet, daß jeder innere Endabschnitt (74, 84) außerhalb der Ringnut (44) eine sich von der Ringnut radial einwärts erstreckende freie Länge hat, die in ein gekrümmtes, eingerolltes Ende (76, 86) ausläuft und sich seitlich und anschließend radial auswärts erweitert, daß einer der inneren Endabschnitte (74) eine wesentlich größere freie Länge aufweist als der andere der inneren Endabschnitte (84), daß die gekrümmten Enden (76, 86) der inneren Endabschnitte (74, 84) in Abstand voneinander verlaufen und sich seitlich in entgegengesetzte Richtungen erstrecken und daß die gekrümmten Enden (76, 86) innere krumme Flächen bilden, die in der Schließstellung des Verschlußgliedes (16) an dessen Dichtfläche (22) gleichzeitig mit Berührung Metall auf Metall dicht anliegen und sowohl in radialer als auch in seitlicher Richtung flexibel sind.

2. Ventilsitzanordnung nach Anspruch 1, bei welcher zwischen den in Abstand voneinander befindlichen inneren Endabschnitten (74, 84) eine elastische weiche Dichtung (66) an einer solchen Stelle angeordnet ist, daß sie mit der verjüngten Dichtfläche (22) des Verschlußgliedes (16) in dichtende Berührung gelangt.

3. Ventilsitzanordnung nach Anspruch 2, bei welcher Mittel zum Halten der weichen Dichtung (66) zwischen den Sitzringen (62, 64) vorgesehen sind, die weiche Dichtung (66) und die gekrümmten Enden (76, 86) beider Sitzringe (62, 64) in der Schließstellung des Verschlußgliedes (16) an diesem gleichzeitig dicht anliegen, die inneren Endabschnitte (74 84) der Sitzringe (62, 64) am Beginn der Berührung mit dem in die Schließstellung bewegten Verschlußglied (16) radial und seitlich auswärts gebogen werden und mit dem Verschlußglied (16) in dessen Schließstellung unter allen Betriebsbedingungen in dichtender Berührung stehen, wobei die gekrümmten Enden (76, 86) in der Schließstellung des Verschlußgliedes (16) durch die Wirkung des Mediumdruckes in dichte Berührung mit dem Verschlußglied gedrückt werden.

4. Ventilsitzanordnung nach Anspruch 3, bei welcher die Seitenteile (70, 80) der Sitzringe (62, 64) gewellt (72, 82) ausgebildet sind und an der weichen Dichtung (66) als Mittel zum Festhalten angreifen.

5. Ventilsitzanordnung nach einem der Ansprüche 1 bis 4, bei welcher die Sitzringe (62, 64) allgemein L-förmigen Querschnitt aufweisen, wobei die äußeren Schenkel (68, 78) der Sitzringe einander überlappen und die Basis eines Metallgehäuses am Grund (58, 60) der Ringnut (44) bilden.

6. Ventilsitzanordnung nach Anspruch 5, bei welcher die äußeren Schenkel (68, 78) der Sitzringe (62, 64) einander überlappend ineinander geschnappt sind.

7. Ventilsitzanordnung nach einem der Ansprüche 1 bis 6, bei welcher der Schenkel (78) des äußeren Sitzringes (64) eine etwas größere Breite als die Breite der Ringnut (44) aufweist und zwischen den Seitenflächen (52, 54) der Ringnut (44) beim Einsetzen der Ventilsitzanordnung in die Nut an den Ecken (44A, 44B) am Grund gequetscht ist, so daß dieser Schenkel radial einwärts verbogen wird und an den Ecken (44A, 44B) der Ringnut (44) Dichtungsstellen entstehen.

8. Ventilsitzanordnung nach einem der Ansprüche 1 bis 7, bei welcher zwischen den Sitzringen (62A, 64A) radial außerhalb der weichen Dichtung (66A) und in Berührung mit dieser ein gesonderter metallener Abstandhalter (98) angeordnet ist, der bei Zerstörung der weichen Dichtung die Seitenteile der Sitzringe (62A, 64A) in Abstand voneinander hält.

9. Klappenventil (10) mit einem Gehäuse (12), das von einem Durchflußkanal (14) durchsetzt ist, in welchem eine Klappe (16) zwischen einer Offenstellung und einer Schließstellung bewegbar angeordnet ist und welcher von einer Ringnut (44) mit einem Grund und in Abstand voneinander befindlichen, allgemein parallelen Seitenflächen (52, 54) mit Ecken (44A, 44B) beim Grund umgeben ist, wobei in der Ringnut (44) eine Ventilsitzanordnung (42) mit einem Paar metallener Sitzringe (62, 64) angeordnet ist, dadurch gekennzeichnet, daß die Sitzringe (62, 64) allgemein L-förmigen Querschnitt aufweisen, wobei die äußeren Schenkel (68, 78) der Sitzringe einander überlappend am Grund der Ringnut (44) und die Seitenteile der Sitzringe an den Seitenflächen der Nut sitzen, daß an einer Anschlußfläche (50) eines Hauptgehäuseteiles ein Sitzhaltering (46) abnehmbar befestigt ist, daß die Ringnut (44) an der Anschlußfläche (50) zwischen dem Sitzhaltering (46) und dem Hauptgehäuseteil angeordnet ist, daß der Sitzhaltering (46) die Sitzringe (62, 64) dicht gegen die Seitenflächen (52, 54) der Ringnut (44) drückt und daß die Seitenteile der Sitzringe Endabschnitte (74, 84) aufweisen, die an der in Schließstellung befindlichen Klappe (16) mit Berührung Metall auf Metall unter allen Betriebsbedingungen dichtend anliegen.

10. Klappenventil nach Anspruch 9, bei welchem der Schenkel (78) des äußeren Sitzringes (64) eine etwas größere Breite als die Breite der Ringnut (44) aufweist und zwischen den Seitenflächen (52, 54) der Ringnut (44) an den Ecken (44A, 44B) gequetscht ist, so daß dieser Schenkel radial einwärts verbogen wird und an den Ecken (44A, 44B) der Ringnut (44) metallische statische Dichtungsstellen gebildet werden.

11. Klappenventil nach Anspruch 10, bei welchem ein Abschnitt des Nutengrundes verjüngt ausgebildet ist, um den Schenkel des äußeren Sitzringes (64) beim Anbringen des Sitzhalteringes (46) einwärts zu drängen.

**0 013 265**

FIG. 3

FIG. 1

FIG. 2

0 013 265

FIG. 4

FIG. 7

FIG. 6

FIG. 5

FIG. 8

FIG. 9

2